# EUROPEAN PATENT SPECIFICATION

(11) **EP 1 758 348 B1**
(45) Date of publication and mention of the grant of the patent: **09.05.2018**
(21) Application number: 06017565.0
(22) Date of filing: 23.08.2006
(51) Int. Cl.: H04M 1/03, H04R 1/28, H01Q 1/24

(54) **Mobile terminal with internal antenna structure having a sound resonance chamber**
Mobiles Endgerät mit einer internen Antennenstruktur mit einer Schallresonanzkammer
Terminal mobile avec une structure d'antenne interne ayant une cavité de résonance sonore

(30) Priority: 24.08.2005 KR 20050078004
(43) Date of publication of application: 28.02.2007
(73) Proprietor: LG Electronics Inc., Seoul, 07336 (KR)
(72) Inventor: Kim, Sul-Ran, Dongan-Gu, Anyang, Gyeonggi-Do (KR)
(74) Representative: Ter Meer Steinmeister & Partner

(56) References cited:
- WO-A1-2004/004408
- WO-A2-00/38475
- DE-A1- 4 410 995
- DE-A1- 10 052 909
- US-A1- 2002 187 758
- US-A1- 2003 068 987

## Description

### BACKGROUND OF THE INVENTION

### 1. Field of the Invention

The present invention relates to a mobile terminal having a speaker unit and an internal antenna, and more particularly, to a mobile terminal having a thin thickness and enhancing speaker sound quality.

### 2. Description of the Background Art

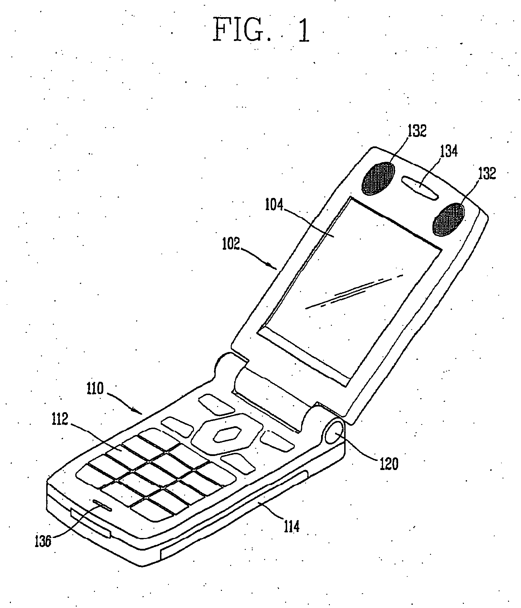

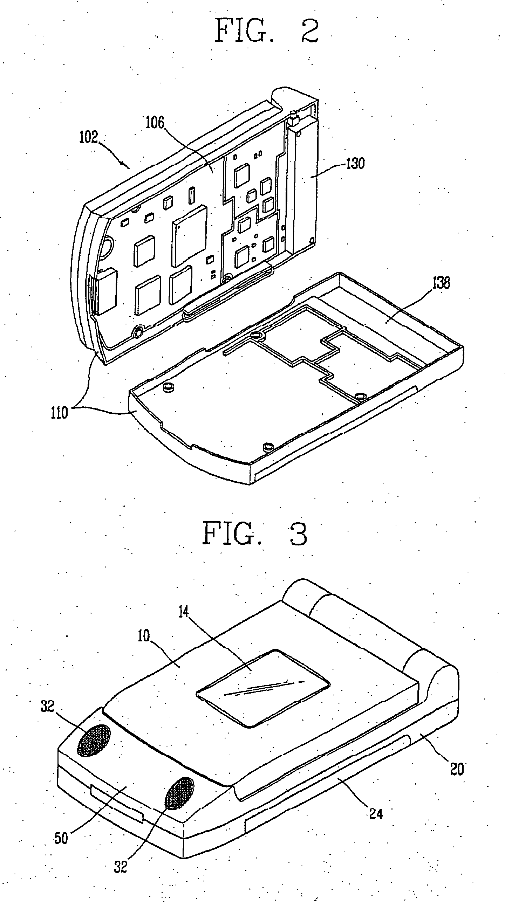

FIG. 1 is a perspective view showing a mobile terminal in accordance with the related art, and FIG. 2 is a disassembled perspective view showing the mobile terminal in accordance with the related art.

The related art portable (mobile) terminal comprises a display unit 102 having a display 104; a terminal body 110 rotatably connected to the display unit 102 by a hinge 120, having a key pad 112 for inputting information at a front surface thereof, having a battery 114 at a rear surface thereof, and having a printed circuit board (PCB) 106 therein; and an internal antenna 130 mounted in the terminal body 110 for transmitting and receiving signals.

A pair of speakers 132 for generating sound are mounted at the display unit 102, and a receiver 134 for outputting voice information is mounted between the speakers 132. Also, a microphone 136 for inputting voice information is mounted at the terminal body 110.

The internal antenna 130 is mounted at the hinge 120 of the terminal body 120 in a width direction of the terminal body, and an antenna receiving portion 138 for receiving the internal antenna 130 is provided in the terminal body 110.

However, the related art portable terminal has the following problem. When a resonance box for enhancing a resonant effect of sound outputted from the speaker is installed within the portable terminal, a thickness of the portable terminal is increased. If the size of the resonance box is made smaller, the resulting sound quality would then be decreased . Also, the required amount of space within the body of the terminal to accommodate an adequate sized resonance box results in less space for other components.

WO 2004/004408 A1 describes a communication terminal. The communication terminal comprises a speaker, an antenna and a PCB. Here, the speaker is located inside a chamber which acts as an acoustic resonance cavity for the speaker and as an electromagnetic resonance cavity for the antenna. The speaker is mounted to the PCB with gaskets.

DE 100 52 909 A1 discloses a communication terminal with an antenna. The communication terminal comprises a PCB and a two parted antenna located at a outer surface of a plastic body. The plastic body forms a chamber and has two recesses for a ear piece and a shielding cavity. By forming openings in the plastic body adjacent to the ear piece, the chamber can be used as a resonance cavity for a acoustic output unit. In addition, since the shielding cavity for electric components of the PCB is provided at one side of the plastic body, the plastic body, the antenna and the sound output unit with recess are mounted directly to the PCB.

US 2003/0068987 A1 describes a structural arrangement for a wireless communication terminal. The wireless communication terminal comprises a sound output unit, an antenna and a PCB. Where a cavity of the antenna is used as a front acoustic cavity of the sound output unit. Therefore, the sound output unit is disposed in a recess in PCB.

WO 00/38475 is concerned with a communication device. The communication device comprises a sound output unit, an antenna and a ground plane, where the sound output unit and an acoustic resonance chamber are placed separately inside a housing and coupled together with an acoustic coupling. The acoustic resonance chamber also performs as an electromagnetic resonance chamber for the antenna. In addition, the ground plane acts a screen for electromagnetic fields between the loudspeaker and the acoustic resonance chamber and is therefore placed between them.

US 2002/0187758 A1 describes a terminal device of a telecommunication network.

The device comprises a speaker, an antenna space for an antenna and a circuit board. Here, the antenna space is placed substantially near the speaker, but on the opposite site of the circuit board.

### SUMMARY OF THE INVENTION

Accordingly, it is an object of the present invention to provide a portable (mobile) terminal capable of being implemented to be slim and enhancing a sound quality from a speaker unit.

This object is solved by the subject-matter of claim 1.

The present invention provides a portable (mobile) terminal capable of being implemented to be slim and enhancing a sound quality from a speaker unit by utilizing an inner space of an antenna as a resonance box (i.e., resonance chamber) of the speaker unit.

The foregoing and other aspects of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a perspective view showing a portable terminal in accordance with the related art;
FIG. 2 is a disassembled perspective view showing the portable terminal in accordance with the related art;
FIG. 3 is a perspective view showing a closed state of a portable terminal according to a first embodiment of the present invention;
FIG. 4 is a perspective view showing an opened state of the portable terminal according to an embodiment of the present invention;
FIG. 5 is a sectional view of the portable terminal according to a first embodiment useful for the understanding of the present invention;
FIG. 6 is a perspective view of an antenna according to an embodiment of the present invention;
FIG. 7 is a frontal view of a printed circuit board according to a first embodiment; and
FIG. 8 is a sectional view of a portable terminal according to an embodiment of the present invention.

### DETAILED DESCRIPTION OF THE INVENTION

Reference will now be made in detail to some embodiments of the present invention, examples of which are illustrated in the accompanying drawings.

Hereinafter, a portable terminal according to the present invention will be explained. A portable terminal may also be referred to as a mobile communication terminal, a mobile phone, or other wireless communication device.

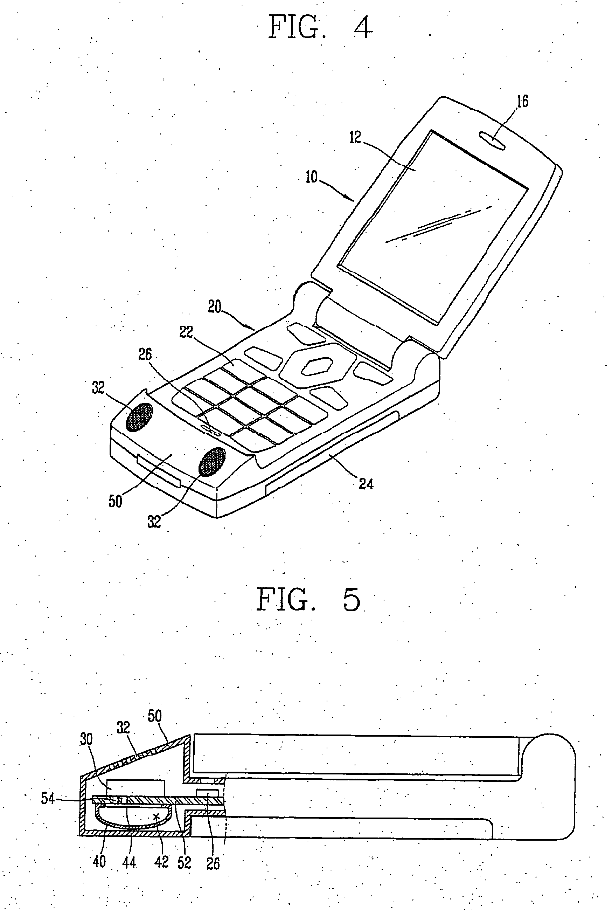

FIG. 3 is a perspective view showing a closed state of a portable terminal according to a first embodiment FIG. 4 is a perspective view showing an opened state of the portable terminal according to an embodiment of the present invention, and FIG. 5 is a sectional view of a portable terminal according to an embodiment useful for the understanding of the present invention.

The portable terminal comprises: a display unit 10 having a main display 12 for displaying information; a terminal body 20 openably connected to the display unit 10, having key buttons 22 (or other user input means) for inputting information, and having a battery 24; a speaker unit 30 (i.e., comprising a cone or diaphragm type speaker, a piezoelectric type speaker, a sound generator, a sound output unit, etc.) mounted at the terminal body 20 for generating sound; and an antenna 40 mounted at the terminal body 20 to allow signal transmission and reception and having a (sound or sonic) resonance chamber (i.e., space or cavity) serving as a resonance box (or enclosure) of the speaker unit 30.

The portable terminal can be applied not only to a folder type but also to a bar type, a slide type, a swing type, etc.

A subsidiary display 14 for displaying information when the portable terminal is in a closed state may be provided at an outer surface of the display unit 10. Also, a receiver 16 for outputting voice signals when a call is received may be provided at an inner surface of the display unit 10. A microphone 26 is mounted at the terminal body 20.

A mounting portion 50 (i.e., an end portion of the mobile terminal near a microphone or mouthpiece) for mounting the speaker unit 30 and the antenna 40 is formed at the terminal body 20. The mounting portion 50 is formed at a lower end of the terminal body 20, and may have a thickness that is greater than that of the terminal body 20 or made to be flush thereof.

The display unit 10 may be formed to have a length shorter than that of the terminal body 20 so as not to cover the mounting portion 50.

An upper surface of the mounting portion 50 may be formed as an inclined surface having a certain inclination angle. Sound holes 32 for passing sounds generated from the speaker unit 30 mounted in the mounting portion 50 may be formed at the inclination surface.

The speaker unit 30 is provided at the terminal body 20 in one pair having a certain gap therebetween along a width direction of the terminal body 20.

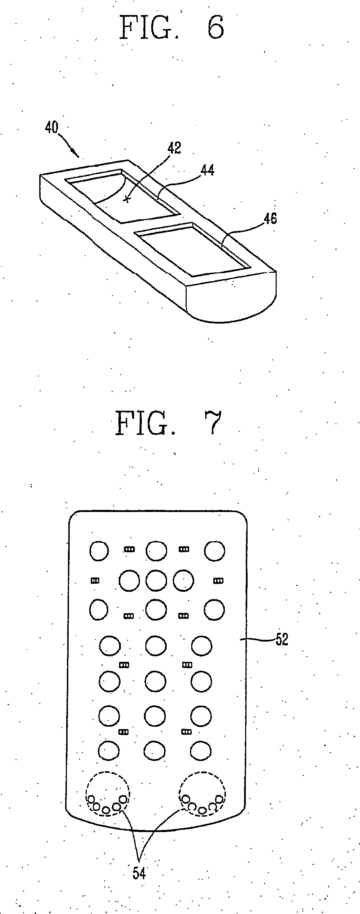

As shown in FIG. 5 and 6, the antenna 40 is mounted at a lower surface of the speaker unit 30, and is implemented as a hollow box shape having an inner space 42 serving as a resonance box of the speaker unit 30. Openings 44 and 46 connected to each rear surface of the speakers are provided at the antenna 40.

One opening 44 of the antenna 40 is connected to a rear surface of one speaker, and another opening 46 is connected to a rear surface of another speaker.

A printed circuit board (PCB) 52 is installed between the speaker unit 30 and the antenna 40. That is, the speaker unit 30 is installed at an upper surface of the printed circuit board 52, and the antenna 40 is installed at a lower surface of the printed circuit board 52. As shown in FIG. 7, a plurality of passages 54 for connecting the rear surface of the speaker unit 30 to the openings 44 and 46 of the antenna 40 are penetratingly formed at the printed circuit board 52.

The antenna 40 is connected to the printed circuit board 52 by a feeding port and a ground port, to allow signal transmission and reception with the printed circuit board 52.

In the portable terminal according to the present invention, the mounting portion having a thickness thicker than that of the terminal body is formed at a lower end of the terminal body, and the speaker unit and the antenna are mounted in the mounting portion. The antenna is provided with an inner space connected to a rear surface of the speaker. Since the inner space of the antenna is utilized as a resonance box for enhancing a resonant effect of sound emitted from the speaker unit, a sound quality from the speaker unit can be enhanced without increasing the thickness of the portable terminal.

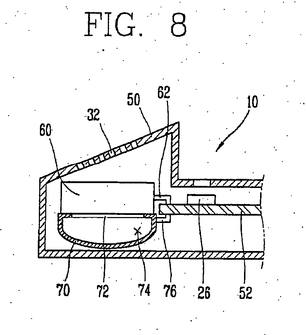

FIG. 8 is a sectional view of a portable terminal according to an embodiment of the present invention.

In the portable terminal according to the embodiment of the present invention, a mounting portion 50 is at a lower end of a terminal body 10, and a speaker unit 60 and an antenna 70 are mounted in the mounting portion 50. Also, the antenna 70 directly contacts with a lower surface of the speaker unit 60 that can be tightly (snuggly) connected to an opening 72 of the antenna 70. Accordingly, an inner space 74 of the antenna 70 serves as a resonance box (i.e., sonic resonance chamber) of the speaker unit 60.

That is, in the portable terminal according to the embodiment of the present invention, the antenna 70 and the speaker unit 60 directly come in contact with each other, thereby further decreasing the thickness the portable terminal.

The speaker unit 60 and the antenna 70 are connected to the printed circuit board 52 by connection lines (or electrical leads) 62 and 76, respectively.

The antenna according to this embodiment may have the same structure as that of the antenna according to the first embodiment, and thus its minute explanation will be omitted.

In the portable terminal according to the present invention, the antenna is provided with an inner space serving as a resonance box of the speaker unit. Accordingly, a sound quality from the speaker unit can be enhanced while the thickness of the portable terminal can be maintained to have a slim profile.

Another embodiment of the present invention can be contemplated. Namely, referring to Figure 8, the speaker unit 60 may be attached directly onto an inner surface of the mounting portion 50 without any gap therebetween. Doing so will allow more internal space within the mounting portion 50 for a larger sized sonic resonance chamber to be formed in the antenna 70. A larger sonic resonance chamber can allow improved sound quality.

Additionally, a so-called bass reflex port (or other type of opening) may be provided at the antenna 70 to allow better resonance for low frequency sound waves, which would result in improved reproduction of deeper (lower) sounds.

The antenna having a sonic resonance chamber therein described above may be made of various types of materials. The entire antenna may be metallic or only certain portions thereof may be made of metal. As long as the characteristics of the material(s) used to form the antenna provide the desired antenna properties, any combination of materials may be used.

Also, the configuration of the antenna itself may take many forms. As long as the necessary antenna properties as well as the desired sonic resonance effects can be obtained, the openings of the antenna, the rear curved portion, the side walls and the like may have various shapes and sizes. The present invention provides a mobile terminal comprising: a sound output unit; and an internal antenna in communication with and located behind the sound output unit, wherein the internal antenna is adapted to allow transmission and reception of radio frequency signals, and formed to have a resonance chamber therein to allow resonance of sounds generated by the sound output unit.

The sound output unit may comprise a set of speakers. The internal antenna may comprise: a front portion having openings that correspond to the speakers and allow sound waves to pass therethrough; and a back portion that encloses a rear surface of the front portion to form the resonance chamber, wherein the back portion has a curved inner surface that allows sound wave resonance

The mobile terminal may further comprise: a body in which the sound output unit and the internal antenna are located; and a PCB provided within the body and having various components that are electrically connected with the sound output unit and the internal antenna. The sound output unit and the internal antenna may be respectively mounted on opposing surfaces of the PCB in a corresponding manner. The PCB has openings that allow sound waves to pass between the sound output unit and the internal antenna. The sound output unit and the internal antenna may be attached together, and have respective electrically connections with the PCB that is located adjacent thereto. The body may comprise: a main section in which the sound output unit and the internal antenna are located; and a moveable section operatively connected with the main section. The main section and the moveable section may form a folder type configuration, a slider type configuration, or a swivel type configuration. The main section further comprises: a microphone located adjacent to the sound output unit and adapted to operate as a sound pick-up device for the mobile terminal.

Also, the present invention provides a portable terminal, comprising: a terminal body; a speaker unit mounted in the terminal body for generating sound; and an antenna mounted in the terminal body for sending and receiving signals and having an inner space serving as a resonance box of the speaker unit.

The antenna may be mounted at a rear surface of the speaker unit, and the inner space of the antenna is connected to the rear surface of the speaker unit. The antenna may have a hollow box shape, and is provided with at least one opening at one side thereof. The speaker may be mounted at one surface of a printed circuit board, the antenna is mounted at an opposing surface of the printed circuit board, and a passage for connecting the rear surface of the speaker to the inner space of the antenna is formed at the printed circuit board.

Furthermore, the present invention provides a portable terminal, comprising: a terminal body; a display unit openably attached to the terminal body; and a speaker unit and an antenna provided at a mounting portion formed in the terminal body, wherein an inner space of the antenna serves as a resonance box of the speaker unit.

The mounting portion may be formed at one end of the terminal body. Sound emitting holes that allow passing of sounds generated from the speaker may be formed at the mounting portion.

## Claims

1. A mobile terminal comprising:
- a body (10);
- a sound output unit (60) mounted in the body (10) for generating sound and located at an end portion of the body with respect to a length direction thereof;
- an internal antenna (70) located to overlap the sound output unit (60); and
- a PCB (52) disposed within the body (10) and comprising a plurality of components electrically connected with at least the sound output unit (60) or the internal antenna (70), wherein the internal antenna (70) is formed to have a resonance chamber (74) therein to allow resonance of sounds generated by the sound output unit (60), and is directly coupled to the sound output unit (60), and
wherein the sound output unit (60) and the internal antenna (70) are connected to the PCB by connection lines, respectively,
**characterized**
**in that** the PCB (52) is spaced apart from the sound output unit (60) and the internal antenna (70) along the length direction,
**in that** the end portion of the body (10) has an inclined surface inclined with respect to a front surface of the body, the inclined surface having sound holes (32) to facilitate passing the sound generated by the sound output unit (60),
**in that** a microphone (26) is located adjacent to the sound output unit (60) and disposed to face the front surface of the body (10), and
**in that** the front surface of the body (10) has a microphone hole facing the microphone (26).

2. The mobile terminal of claim 1, wherein the sound output unit (60) comprises a set of speakers.

3. The mobile terminal of claim 2, wherein the internal antenna (70) comprises:
- a front portion having openings (32) that correspond to the speakers and allow sound waves to pass therethrough; and
a back portion that encloses a rear surface of the front portion to form the resonance chamber,
wherein the back portion has a curved inner surface that allows sound wave resonance.

4. The mobile terminal of claim 1, wherein the body (10) comprises:
- a main section in which the sound output (60) unit and the internal antenna are located; and
- a moveable section operatively connected with the main section.

5. The mobile terminal of claim 4, wherein the main section and the moveable section form a folder type configuration, a slider type configuration, or a swivel type configuration.

6. The mobile terminal of claim 5, wherein the main section further comprises:
- a microphone (26) located adjacent to the sound output unit and adapted to operate as a sound pick-up device for the mobile terminal.

## Patentansprüche

1. Mobiles Endgerät, das Folgendes umfasst:
- einen Körper (10);
- eine Schallausgabeeinheit (60), die in dem Körper (10) zum Erzeugen von Schall befestigt ist und die bei einem Endabschnitt des Körpers in Bezug auf eine seiner Längsrichtungen positioniert ist;
- eine interne Antenne (70), die so positioniert ist, dass sie mit der Schallausgabeeinheit (60) überlappt; und
- eine PCB (52), die in dem Körper (10) angeordnet ist und mehrere Komponenten umfasst, die mindestens mit der Schallausgabeeinheit (60) oder der internen Antenne (70) elektrisch verbunden sind,
wobei die interne Antenne (70) so ausgebildet ist, dass sie in sich eine Resonanzkammer (74) aufweist, um Resonanzen von von der Schallausgabeeinheit (60) erzeugtem Schall zu ermöglichen, und direkt an die Schallausgabeeinheit (60) gekoppelt ist, und
wobei die Schallausgabeeinheit (60) und die interne Antenne (70) jeweils mit der PCB durch Verbindungsleitungen verbunden sind,
**dadurch gekennzeichnet, dass**
die PCB (52) von der Schallausgabeeinheit (60) und der internen Antenne (70) in der Längsrichtung beabstandet ist,
der Endabschnitt des Körpers (10) eine geneigte Oberfläche besitzt, die in Bezug auf eine Stirnseite des Körpers geneigt ist, wobei die geneigte Oberfläche Schalllöcher (32) besitzt, um den Durchgang des von der Schallausgabeeinheit (60) erzeugten Schalls zu ermöglichen,
ein Mikrophon (26) angrenzend an die Schallausgabeeinheit (60) positioniert ist und so angeordnet ist, dass es der Stirnseite des Körpers (10) zugewandt ist, und
die Stirnseite des Körpers (10) eine Mikrophonöffnung aufweist, die dem Mikrophon (26) zugewandt ist.

2. Mobiles Endgerät nach Anspruch 1, wobei die Schallausgabeeinheit (60) eine Gruppe von Lautsprechern umfasst.

3. Mobiles Endgerät nach Anspruch 2, wobei die interne Antenne (70) Folgendes umfasst:
- einen Stirnabschnitt, der Öffnungen (32) besitzt, die den Lautsprechern entsprechen und die sich Schallwellen bewegen können; und
- einen rückwärtigen Abschnitt, der eine Rückseite des Stirnabschnitts umschließt, um die Resonanzkammer auszubilden,
wobei der rückwärtige Abschnitt eine gekrümmte Innenfläche besitzt, durch die Schallwellen in Resonanz treten können.

4. Mobiles Endgerät nach Anspruch 1, wobei der Körper (10) Folgendes umfasst:
- einen Hauptabschnitt, in dem die Schallausgabeeinheit (60) und die interne Antenne positioniert sind; und
- einen beweglichen Abschnitt, der betriebstechnisch mit dem Hauptabschnitt verbunden ist.

5. Mobiles Endgerät nach Anspruch 4, wobei der Hauptabschnitt und der bewegliche Abschnitt eine klappbare Konfiguration, eine schiebbare Konfiguration oder eine schwenkbare Konfiguration bilden.

6. Mobiles Endgerät nach Anspruch 5, wobei der Hauptabschnitt ferner Folgendes umfasst:
- ein Mikrophon (26), das angrenzend an die Schallausgabeeinheit positioniert ist und dafür ausgelegt ist, als eine Schallaufhahmevorrichtung für das mobile Endgerät zu arbeiten.

## Revendications

1. Terminal mobile, comprenant :
- un corps (10) ;
- une unité de sortie sonore (60) montée dans le corps (10) pour générer un son et située à une portion d'extrémité du corps par rapport à un sens de longueur de celui-ci ;
- une antenne interne (70) située pour chevaucher l'unité de sortie sonore (60) ; et
- une carte de circuits imprimés, PCB, (52) disposée à l'intérieur du corps (10) et comprenant une pluralité de composants raccordés électriquement au moins à l'unité de sortie sonore (60) ou à l'antenne interne (70),
dans lequel l'antenne interne (70) est formée pour comporter une chambre de résonance (74) à l'intérieur de celle-ci pour permettre une résonance de sons générés par l'unité de sortie sonore (60) et est directement couplée à l'unité de sortie sonore (60), et
dans lequel l'unité de sortie sonore (60) et l'antenne interne (70) sont respectivement raccordées à la PCB par des lignes de raccordement,
**caractérisé**
**en ce que** la PCB (52) est espacée de l'unité de sortie sonore (60) et de l'antenne interne (70) dans le sens de longueur,
**en ce que** la portion d'extrémité du corps (10) comporte une surface inclinée qui est inclinée par rapport à une surface avant du corps, la surface inclinée comportant des trous de son (32) pour faciliter le passage du son généré par l'unité de sortie sonore (60),
**en ce qu'**un microphone (26) est situé adjacent à l'unité de sortie sonore (60) et disposé pour faire face à la surface avant du corps (10), et
**en ce que** la surface avant du corps (10) comporte un trou de microphone faisant face au microphone (26).

2. Terminal mobile selon la revendication 1, dans lequel l'unité de sortie sonore (60) comprend un ensemble de haut-parleurs.

3. Terminal mobile selon la revendication 2, dans lequel l'antenne interne (70) comprend :
- une portion avant comportant des ouvertures (32) qui correspondent aux haut-parleurs et qui permettent aux ondes sonores de les traverser ; et
- une portion arrière qui renferme une surface arrière de la portion avant pour former la chambre de résonance,
dans lequel la portion arrière comporte une surface intérieure incurvée permettant une résonance d'ondes sonores.

4. Terminal mobile selon la revendication 1, dans lequel le corps (10) comprend :
- une section principale dans laquelle l'unité de sortie sonore (60) et l'antenne interne sont situées ; et
- une section mobile raccordée, de manière opérationnelle, à la section principale.

5. Terminal mobile selon la revendication 4, dans lequel la section principale et la section mobile forment une configuration de type rabattable, une configuration de type coulissante ou une configuration de type pivotante.

6. Terminal mobile selon la revendication 5, dans lequel la section principale comprend en outre :
- un microphone (26) situé adjacent à l'unité de sortie sonore et apte à fonctionner en tant que dispositif de détection sonore pour le terminal mobile.
